# EUROPEAN PATENT APPLICATION

(11) **EP 4 742 429 A1**
(43) Date of publication of application: **13.05.2026**
(21) Application number: 24211425.4
(22) Date of filing: 07.11.2024
(51) Int. Cl.: H01M 50/54, B23K 20/10, B23K 37/04, B23K 101/38

(54) **A SYSTEM AND A METHOD FOR MANUFACTURING AN ELECTRODE ASSEMBLY**

(71) Applicant: LG Energy Solution, Ltd., Seoul 07335 (KR)
(72) Inventor: CHOI, Jin Hyeong, 34122 Daejeon (KR); HONG, Jong Hyuk, 34122 Daejeon (KR); KIM, Min Hyung, 34122 Daejeon (KR); LEE, Gyu Sun, 34122 Daejeon (KR)
(74) Representative: BCKIP Part mbB

(57) **Abstract**

A system for manufacturing an electrode assembly is provided, wherein the electrode assembly includes a plurality of unit electrode cells stacked on one another, each of the plurality of unit electrode cells having a unit electrode tab, and wherein the electrode assembly has a main body portion and a tab portion, the tab portion including a plurality of unit electrode tabs protruding from the main body portion. The system comprises: a welding part configured to weld the plurality of unit electrode tabs by applying vibration force; a tab guide for collecting the plurality of unit electrode tabs to supply the collected unit electrode tabs to the welding part for welding; and a tab fixing block configured to hold and press the plurality of unit electrode tabs collected by the tab guide, such that the vibration force applied by the welding part is not transmitted to the main body portion of the electrode assembly.

## Description

### TECHNICAL FIELD

The present invention relates to a system and a method for manufacturing an electrode assembly.

More particularly, the present invention relates to a system for manufacturing an electrode assembly capable of preventing an electrode tab of the electrode assembly from being damaged during a welding process of the electrode tab.

The present invention also relates to a method for manufacturing an electrode assembly, according to which an electrode tab of the electrode assembly can be prevented from damages resulting from a vibration force applied during the welding process of the electrode tab.

### BACKGROUND

Secondary batteries, or often called rechargeable batteries, can be discharged by being used and then restored to their original state by charging. Secondary batteries have recently been widely used as an energy source of wireless devices, such as a personal digital devices, mobile telephone, or notebook computer. Moreover, the secondary battery has attracted attention as an energy source of an electric vehicle, a hybrid electric vehicle, and the like, which are regarded as a solution to the air pollution problem caused by traditional gasoline or diesel vehicles using fossil fuel. Due to the apparent advantages of the secondary battery over other traditional energy sources, the application of secondary battery continuously becomes wider and the consumer's demands for the secondary battery is also increasing.

Among various secondary batteries, a lithium secondary battery is particularly widely used as an energy source for various electronic products because the lithium secondary battery shows a high energy density, a high operating voltage, as well as excellent storage and lifetime characteristics.

In the meantime, secondary batteries can be also classified depending on the shape of a battery case. For example, they may be classified into cylindrical or prismatic batteries, according to which an electrode assembly is embedded in a cylindrical or prismatic metal can. Furthermore, in case of pouch-type batteries, the electrode assembly is embedded in a pouch-type case of an aluminum laminate sheet.

The electrode assembly, embedded in the battery case, functions as a power generating element capable of charging and discharging. The electrode assembly comprises a positive electrode, a negative electrode, and a separator interposed between the positive and the negative electrodes.

The electrode assembly can be generally classified into a jelly-roll type and a stack type. In case of the j elly-roll type electrode assembly, a positive electrode and a negative electrode, which are long sheet-shaped and are coated with an active material, are wound along their longitudinal direction, having a separator interposed therebetween. On the other hand, in case of the stack type electrode assembly, a plurality of positive electrodes and negative electrodes of a predetermined size are sequentially stacked on top of the other, having a separator interposed therebetween.

At a longitudinal end of the stack type electrode assembly, a plurality of unit electrode tabs are provided. The unit electrode tabs are to be welded together and, depending on the specification of the electrode assembly, may be subsequently attached to an electrode lead for an electric connection to an external battery terminal. Otherwise, the bundled and welded unit electrode tabs, forming an electrode tab of the electrode assembly, may be directly connected to an external battery terminal. Anyway, in the process of forming an electrode tab by welding the bundled unit electrode tabs (typically called "pre-welding"), a defect can occur due to various reasons, particularly including occurrence of damages to the unit electrode tabs.

Accordingly, it would be advantageous to develop a technology capable of addressing the above technical problem, by reducing or preventing damages to an electrode tab during the pre-welding process.

### SUMMARY OF THE INVENTION

It is an objective of the present invention to provide a system and a method for manufacturing an electrode assembly. The problem is at least partially solved or alleviated by the subject-matter of independent claims, wherein further examples are incorporated in dependent claims. One aspect of the present invention relates to a system for manufacturing an electrode assembly. The electrode assembly may include a plurality of unit electrode cells stacked on one another. Each of the plurality of unit electrode cells may have a unit electrode tab. The electrode assembly may have a main body portion and a tab portion. The tab portion may include a plurality of the electrode tabs protruding from the main body portion. The system comprises a welding part configured to weld the plurality of unit electrode tabs by applying vibration force. The system may further comprise a tab guide for collecting the plurality of unit electrode tabs to supply the collected unit electrode tabs to the welding part for welding. Furthermore, the system may additionally comprise a tab fixing block configured to hold and press the plurality of unit electrode tabs collected by the tab guide, such that the vibration force applied by the welding part is not transmitted to the main body portion of the electrode assembly.

Accordingly, the system can prevent an electrode tab of an electrode assembly from being deformed or damaged by a vibration force generated by the welding part. Since the plurality of unit electrode tabs are fixed by the tab fixing block during the welding process, the vibration force applied at one side of the unit electrode tabs cannot be transmitted to the other side through the fixed portion. Accordingly, deformation or damage of the electrode tab due to horizontal vibration force during the welding process can be effectively prevented or reduced.

The electrode assembly may be formed by stacking unit electrode cells, wherein the each of the unit electrode cells may have a laminated structure of a positive electrode, a negative electrode, and/or a separator. However, the laminated structure of the unit electrode cell is not limited thereto. The unit electrode cell may have a different structure. For example, the unit electrode cell may be an A-type bi-cell having a laminated structure of a positive electrode, a separator, a negative electrode, a separator and a positive electrode or a C-type bi-cell having a laminated structure of a negative electrode, separator, a positive electrode, a separator and a negative electrode. The unit electrode cell may be a Mono-cell having a laminated structure of a positive electrode, a separator, a negative electrode and a separator. The unit electrode cell may as well be a Half-cell having a laminated structure of a separator, a negative electrode and a separator. In the laminated structure, the electrodes and the separator are securely bonded together by heat and pressure applied during or after the stacking process.

The electrode tab of the electrode assembly may include a portion of the positive or the negative electrode in the unit electrode cell. The unit electrode tab may be formed by a notching process before an electrode sheet is divided into individual electrodes. The notching process is performed at one or both sides of an electrode sheet, on which an electrode mixture material is not coated. During the notching process, a portion of the electrode sheet is selectively removed or cut to create an (unit) electrode tab where the coated electrode mixture is absent. The electrode sheet may have a structure in which the electrode mixture layer is coated on one side or both sides of a current collector layer. The current collector layer may be a thin metal foil designed to conduct electric current between an electrochemical active material and an external circuit of the battery. For example, an aluminum layer may be used for the cathode current collector, while a copper layer may be used for the anode current collector. An additional coating layer may be coated on the current collector layer to improve adhesion with the active materials, enhance corrosion resistance, or reduce electrical resistance.

In the welding process, a target portion of the plurality of unit electrode tabs may be placed on the welding part, and high frequency vibration may be applied to the unit electrode tabs. The vibration energy is converted into thermal energy between the unit electrode tabs, thereby welding the unit electrode tabs. The welding part may include a horn and anvil to apply the high frequency vibration.

Before the welding process is performed, collecting the plurality of unit electrode tabs may be performed. In this process, the tab guide may be used to exert pressure to the plurality of unit electrode tabs in a predetermined direction and gather them together. As an example, the tab guide may bend the plurality of unit electrode tabs at an inclination of 5 to 40 degrees, so as to gather them together and form a tab bundle. The thickness of the tab bundle may be generally 0.1 mm to 1.5 mm, although the thickness may vary depending on the type or model of the electrode assembly. In addition to the tab guide, the tab fixing block may be used to fix the unit electrode tabs. For example, the tab fixing block having an upper tab fixing block and a lower tab fixing block applies a sufficient pressure to an interposed tab bundle, such that vibration force generated by the welding part cannot be transmitted to the main portion of the electrode assembly - or to be exact, to the terminal portion of the electrode tab connected to the main body portion of the electrode assembly.

According to an embodiment of the present invention, the tab fixing block may include two separate pieces being configured to change an interval therebetween. Preferably, the tab fixing block may be further configured to hold and press the plurality of unit electrode tabs positioned in the interval between the two pieces during operation of the welding part.

Accordingly, the present invention can apply a sufficient pressure to an interposed tab bundle, such that a vibration force generated by a welding jig cannot be transmitted to the main body portion of the electrode assembly - or to be exact, to the terminal portion of the electrode tab connected to the main body portion of the electrode assembly. According to an embodiment of the present invention, the tab fixing block may be positioned between the tab guide and the welding part.

Meanwhile, according to an embodiment of the present invention, the tab guide may include two separate parts configured to make a relative movement with respect to each other, so as to guide and collect the plurality of unit electrode tabs interposed therebetween.

According to an embodiment of the present invention, the welding part may include two separate portions configured to make a relative movement with respect to each other. The welding part may be optionally configured to perform vibration welding by making a relative movement between the two portions while the collected unit electrode tabs are interposed therebetween.

According to an embodiment of the present invention, the two portions of the welding part may be respectively a horn and an anvil. Preferably, the relative movement between the two portions may be made in a horizonal direction.

According to an embodiment of the present invention, the system for manufacturing an electrode assembly may further comprise: a plate on which the main body portion of the electrode assembly is to be placed; and a pusher configured to press the main body portion of the electrode assembly placed on the plate against the plate, so as to hold the electrode assembly during the welding operation by the welding part.

A further aspect of the present invention is directed to a method for manufacturing an electrode assembly. The electrode assembly may include a plurality of unit electrode cells stacked on one another. Each of the plurality of unit electrode cells may have a unit electrode tab. The electrode assembly may have a main body portion and a tab portion. The tab portion may include a plurality of the unit electrode tabs protruding from the main body portion. The method comprises collecting the plurality of unit electrode tabs by a tab guide. The method may further comprise welding the collected plurality of unit electrode tabs by vibration welding. According to the present invention, during the vibration welding, the collected unit electrode tabs may be held and pressed by a tab fixing block, such that vibration force applied to the unit electrode tabs is not transmitted to the main body portion of the electrode assembly.

Accordingly, the method can prevent an electrode tab of an electrode assembly from being deformed or damaged by a vibration force during the welding. Since the plurality of unit electrode tabs are fixed by the tab fixing block during the welding process, the vibration force applied at one side of the unit electrode tabs cannot be transmitted to the other side through the fixed portion. Accordingly, deformation or damage of the electrode tab due to horizontal vibration force during the welding process can be effectively prevented or reduced.

According to an embodiment of the present invention, the tab fixing block may include two separate pieces. During the vibration welding, the unit electrode tabs may be preferably held and pressed by the two pieces, being positioned in an interval therebetween.

According to an embodiment of the present invention, the tab guide may include two separate parts, and the plurality of unit electrode tabs may be collected by being interposed between and guided by the two separate parts.

According to an embodiment of the present invention, the vibration welding may be performed by a relative movement between two separate portions of a welding part in a state the collected unit electrode tabs are interposed between the two portions.

According to an embodiment of the present invention, during the vibration welding, the main body portion of the electrode assembly may be placed on a plate and held in place by being pressed by a pusher.

When forming an electrode tab by welding a plurality of unit electrode tabs in accordance with the present invention, a deformation or a damage can be prevented or reduced because vibration force applied to the tab portions during welding of the electrode tab bundle is not transmitted to the main body portion of the electrode assembly.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Fig. 1: schematically illustrates an apparatus for manufacturing an electrode assembly in accordance with the related art.
- Fig. 2: is a photograph showing an electrode tab damaged during the pre-welding process using the manufacturing apparatus according to the related art.
- Fig. 3: is a schematic illustration of an apparatus for manufacturing an electrode assembly in accordance with an embodiment of the present invention, prior to performing a welding process.
- Fig. 4: is a schematic illustration of an apparatus for manufacturing an electrode assembly in accordance with an embodiment of the present invention, during a welding process.

### DETAILED DESCRIPTION OF EXEMPLARY EMBODIMENTS

Terms or words used in the present description and claims should not be restrictively interpreted as ordinary meanings or dictionary-based meanings, but should be interpreted as meanings and concepts consistent with the technical ideas of the present invention in the broadest possible way.

In the present disclosure, it should be understood that terms "comprises", "includes", "has", etc. specify the presence of stated features, numbers, steps, operations, elements, components, or combinations thereof, but do not preclude the presence or addition of one or more other features, numbers, steps, operations, elements, components, or combinations thereof.

Also, when a portion such as a layer, a film, an area, a plate, or the like is referred to as being "on" another portion, this includes not only the case in which the portion is "directly on" the another portion, but also the case in which still another portion is interposed therebetween. In contrast, when a portion such as a layer, a film, an area, a plate, or the like is referred to as being "below" another portion, this includes not only the case in which the portion is "directly below" the another portion, but also the case in which still another portion is interposed therebetween. In addition, to be disposed "on" in the present disclosure may include the case disposed at the lower portion as well as the upper portion.

Terms such as "first" and "second" may be used to describe various components, but the components should not be limited by the terms. The terms are used only for the purpose of distinguishing one component from another. For example, without departing from the scope of the present invention, a first component may be referred to as a second component, and similarly, the second component may also be referred to as the first component. Singular expressions include plural expressions unless the context clearly indicates otherwise.

In addition, the same reference numbers will be used throughout the drawings to refer to parts that perform similar functions or operations. In the case in which one part is said to be connected to another part in this disclosure, not only may the one part be directly connected to the other part, but also the one part may be indirectly connected to the other part via a further part. In addition, that a certain element is included does not mean that other elements are excluded, but means that such elements may be further included unless mentioned otherwise.

Hereinafter, a system and a method for manufacturing an electrode assembly in accordance with the present invention will be described in detail with reference to the accompanying drawings.

An electrode sheet may have a structure in which an electrode mixture layer is coated on one side or both sides of a current collector layer.

The electrode mixture layer may be a slurry containing an active material, a binder, and a solvent, wherein the binder helps to hold the active material particles together and adhere them to the current collector layer. The active materials are components that undergo electrochemical reactions to store and release energy during the charge and discharge cycles in the secondary battery. For example, one or more of lithium cobalt oxide, lithium manganese oxide, lithium iron phosphate, nickel manganese, and nickel cobalt aluminum oxide may be used as a cathode active material. For example, one or more of graphite, lithium titanate, and silicon-based materials may be used as an anode active material.

The current collector layer may be a thin metal foil designed to conduct electric current between an electrochemical active material and an external circuit of the battery. For example, an aluminum layer may be is used for the cathode current collector, while a copper layer may be used for the anode current collector. An additional coating layer may be coated on the current collector layer to improve adhesion with the active materials, enhance corrosion resistance, or reduce electrical resistance.

The electrode mixture layer may be coated onto the current collector layer to the desired thickness in the desired area. The coated portion may be positioned in the middle of the electrode sheet along its width, and the uncoated portion may be positioned, e.g., at both sides of the coated portions. Various methods may be used for the coating process. For example, the slurry may be spread evenly across the surface of the current collector layer by a blade. The slurry may be extruded through a narrow slot die onto the moving current collector layer. The current collector may be dipped into the slurry and then withdrawn at a controlled speed. Otherwise, the slurry may be atomized and sprayed onto the current collector.

After coating the electrode mixture layer on the current collector layer, a process for increasing density of the coated electrode mixture layer is performed, typically being called a drying and pressing process. The process reduces the thickness of the electrode sheet to achieve the desired density, which enhances both the energy density and mechanical integrity of the electrode sheet. For example, a heavy roller with a heater may be used for pressing the electrode sheet. A pressure is to be exerted on the electrode sheet by the heavy roller during the process.

A process of called notching may be performed in areas of a non-coated portion of the electrode sheet for forming an electrode tab. During the notching process, a portion of the electrode sheet is selectively removed or cut to create an electrode tab where the coated electrode mixture is absent. The process may be done by using precision tools like lasers or mechanical dies. The electrode tab is designed to leave a specific area of the current collector layer for attaching an electrode lead. The electrode lead may be a strip of metal that will be used to connect the electrode tab to an external battery terminal. The electrode tab may be formed in a specific pattern, such as rectangular, U-shaped, or V-shaped cuts, to optimize the attachment of the electrode lead and ensure a good electrical connection.

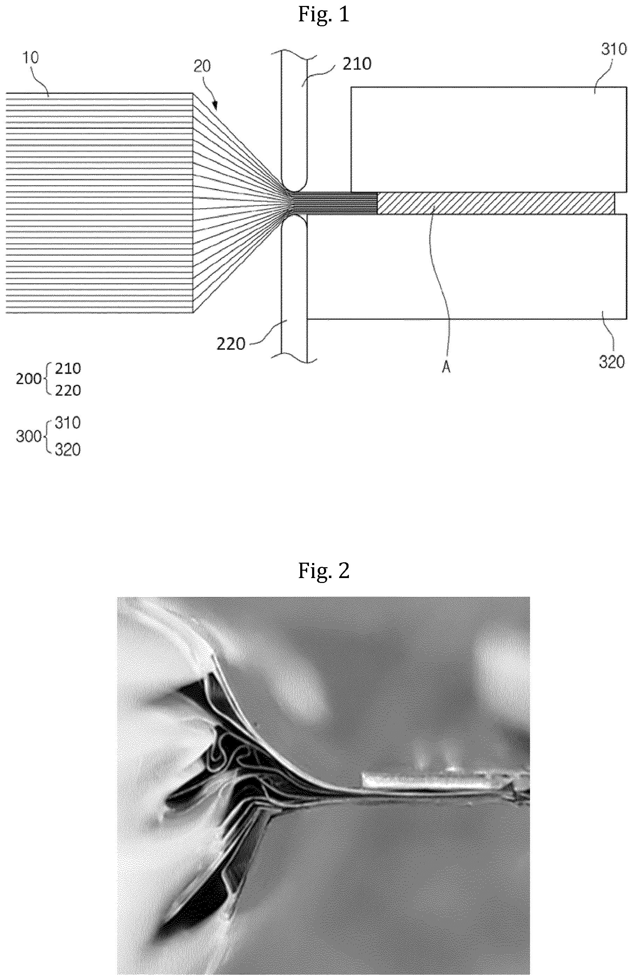

FIG. 1 schematically illustrates an exemplary apparatus for manufacturing an electrode assembly in accordance with the related art, particularly in the process of forming an electrode tab.

Making reference to FIG. 1, an electrode assembly 10 comprises a plurality of unit electrode cells, each of which is provided with a unit electrode tab at one end thereof. Respective ones of the plurality of unit electrode cells are gathered together and welded to each other. The resultant welded electrode tab 20 is in the subsequent process to be connected to an electrode lead. When the electrode assembly 10 is accommodated in a battery case in a sealed state, the electrode assembly 10 may be electrically connected to the outside through the electrode lead.

In order to form the electrode tab 20, the unit electrode tabs are gathered together and subjected to a welding process (typically called "pre-welding") using a horn 310 and an anvil 320. If the pre-welding process is inappropriately carried out, foreign materials can be introduced to the side of the electrode assembly 10, thereby deteriorating quality of the electrode assembly. In order to prevent this, the pre-welding process employs tab guides 200, including an upper tab guide 210 and a lower tab guide 220, as shown in FIG. 1. The two tab guides 210 and 220, respectively positioned above and below the plurality of unit electrode tabs, are both bar-shaped, so as to form an electrode tab bundle by pressing and collecting the plurality of unit electrode tabs. Once the plurality of unit electrode tabs is gathered together, the formed bundle is welded by a welding jig 300. To be specific, a welding target portion A of the plurality of unit electrode tabs is placed on an anvil 320, a horn 310 being placed on top of the welding target portion A. Then the horn 310 and the anvil 320 apply high-frequency vibration, e.g., generated by an ultrasonic wave having a frequency of about 20 kHz. The vibration energy is converted into thermal energy between the unit electrode tabs, thereby welding the electrode tab bundle.

When the vibration force generated by the horn 310 and the anvil 320 is applied in the horizontal direction, the electrode tab bundle - particularly inner layers thereof - can be deformed and damaged, e.g., due to interaction of different frictional forces exerted between layers. Fig. 2 shows an example of an electrode tab damaged during the pre-welding process.

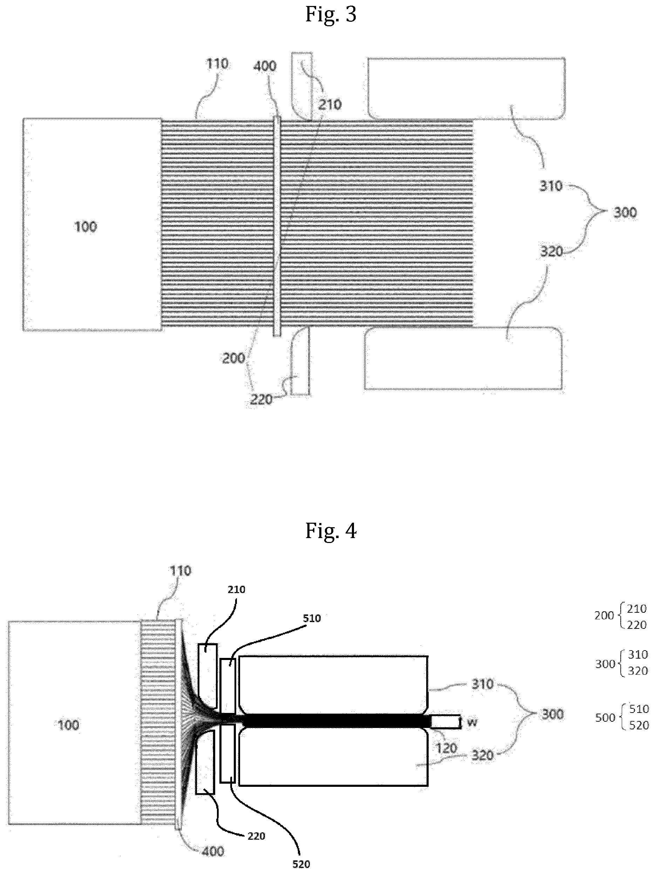

Fig. 3 schematically illustrates a system for manufacturing an electrode assembly in accordance with one embodiment of the present invention, with a stack-type electrode assembly before being pressed by the system for manufacturing an electrode assembly. Meanwhile, FIG. 4 also schematically shows the same system, but with the electrode assembly after being pressed. In both figures, the electrode assembly 100 has a structure in which a positive electrode, a separator, and a negative electrode are sequentially stacked. The separator is located between the positive electrode and the negative electrode to electrically isolate the positive electrode and the negative electrode from each other.

The manufacturing system of the present embodiment particularly includes elements that are configured for forming an electrode tab of an electrode assembly 100. The manufacturing system, for example, includes tab guides 200 - an upper tab guide 210 and a lower tab guide 220 - configured to gather the plurality of unit electrode tabs 110 together in order to form a tab bundle 120, a welding jig 300 configured to weld the tab bundle 120, and an electrode tab arranging portion 400 disposed between a main body portion of the electrode assembly 100 and the tab guides 200. The electrode tab arranging portion 400 is configured to maintain the distance between the respective ones of the plurality of unit electrode tabs 110.

The electrode assembly 100 generally comprises a main body portion and an electrode tab portion (i.e., the plurality of unit electrode tabs 110 in Fig. 3 and the tab bundle 120 in Fig. 4) protruding from the main body portion. The electrode assembly 100, for example, may be a stack-type, including a plurality of electrode cells stacked on top of each other. Each electrode cell of the stack-type electrode assembly may be structured such that a rectangular positive electrode and a rectangular negative electrode are sequentially stacked with a separator is interposed therebetween. The electrode assembly 100 may also be a stacked and folded type, according to which unit cells are wound using a long separator film. The electrode assembly 100 may further be a laminated and stacked type, according to which unit cells are stacked, having a separator interposed therebetween and then being attached to each other.

The unit electrode tabs 110 may be made of a material showing high conductivity, such as aluminum, copper, or carbon nanotubes. In any case, any material suitable for the unit electrode tabs 110 may be generally used, not being limited to those exemplified.

Before being welded, the plurality of unit electrode tabs 110 is pressed in a predetermined direction and gathered together by using the tab guides 200. As an example, the tab guides 200 may bend the plurality of unit electrode tabs 110 at an inclination of 5 to 40 degrees to gather them together and form the tab bundle 120. The thickness w of the tab bundle 120 may be generally 0.1 mm to 1.5 mm, although the thickness may vary depending on the type or model of the electrode assembly 100.

The tab bundle 120 may be either connected to an electrode lead by welding or directly connected to an external device. Only one surface of the tab bundle 120 may be connected to an electrode lead, or two opposite surfaces of the tab bundle 120 may be respectively connected to the electrode lead. A welding tape may be adhered to the tab bundle 120, thereby facilitating joining of the electrode tab with the electrode lead or the external device.

The tab bundle 120, once being formed by the tab guides 200, becomes subject to a welding process (or typically called a pre-welding) by using the welding jig 300, in order to facilitate connection of the electrode tab to the electrode lead or the external device.

As an example, when the pre-welding process is performed using ultrasonic waves, high-frequency (e.g., about 20 kHz) vibration generated by ultrasonic waves may be applied, while the tab bundle 120 is placed between a horn 310 and an anvil 320. In this process, the vibration energy is converted into thermal energy through friction; and therefore, rapid welding of the tab bundle 120 can be performed.

However, when the vibration force generated by the horn 310 and the anvil 320 is applied to the tab bundle 120 in the horizontal direction, the tab bundle - particularly its inner layers - can be deformed and damaged, for example, due to interaction of frictional forces exerted between electrode tab layers.

In order to avoid or minimize such a negative effect, the tab bundle 120 is fixed by using tab fixing blocks 500, as shown in Fig. 4, during the pre-welding process. Tab fixing blocks 500 include an upper tab fixing block 510 and a lower tab fixing block 520. When viewed in the horizontal direction, the tab fixing blocks 500 are positioned between the welding jig 300 and the tab guides 200.

The two tab fixing blocks 510 and 520, respectively from above and below, apply a sufficient pressure to the interposed tab bundle 120, such that the vibration force generated by the welding jig 300 cannot be transmitted to the main body portion of the electrode assembly 100 - or to be exact, to the terminal portion of the electrode tab connected to the main body portion of the electrode assembly 100.

Since the tab bundle 120 is fixed by the tab fixing blocks 500 during the pre-welding process, the vibration force applied at one side of the tab bundle 120 (i.e., a welding target portion) cannot be transmitted to the other side (i.e., the terminal portion of the electrode tab connected to the main body portion of the electrode assembly 100) through the fixed portion of the tab bundle 120. Accordingly, deformation or damage of the electrode tab due to horizontal vibration force during the pre-welding can be effectively prevented or reduced.

Although specific embodiments have been illustrated and described herein, it will be appreciated by those of ordinary skill in the art that a variety of alternate and/or equivalent implementations exist. It should be appreciated that the exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

### LIST OF REFERENCE SIGNS

- 10: electrode assembly
- 20: electrode tab
- 100: electrode assembly
- 110: unit electrode tab
- 120: tab bundle
- 200: tab guides
- 210: upper tab guide
- 220: lower tab guide
- 300: welding jig
- 310: horn
- 320: anvil
- 400: electrode tab arranging portion
- 500: tab fixing blocks
- 510: upper tab fixing block
- 520: lower tab fixing block

## Claims

1. A system for manufacturing an electrode assembly, wherein the electrode assembly includes a plurality of unit electrode cells stacked on one another, each of the plurality of unit electrode cells having a unit electrode tab, and wherein the electrode assembly has a main body portion and a tab portion, the tab portion including a plurality of the unit electrode tabs protruding from the main body portion, the system comprising:
a welding part configured to weld the plurality of unit electrode tabs by applying vibration force;
a tab guide for collecting the plurality of unit electrode tabs to supply the collected unit electrode tabs to the welding part for welding; and
a tab fixing block configured to hold and press the plurality of unit electrode tabs collected by the tab guide, such that the vibration force applied by the welding part is not transmitted to the main body portion of the electrode assembly.

2. The system of claim 1,
wherein the tab fixing block includes two separate pieces being configured to change an interval therebetween, and
wherein the tab fixing block is configured to hold and press the plurality of unit electrode tabs positioned in the interval between the two pieces during operation of the welding part.

3. The system of claim 1 or 2, wherein the tab fixing block is positioned between the tab guide and the welding part.

4. The system of any one of the preceding claims, wherein the tab guide includes two separate parts configured to make a relative movement with respect to each other, so as to guide and collect the plurality of unit electrode tabs interposed therebetween.

5. The system of any one of the preceding claims,
wherein the welding part includes two separate portions configured to make a relative movement with respect to each other, and
wherein the welding part is configured to perform vibration welding by making a relative movement between the two portions while the collected unit electrode tabs are interposed therebetween.

6. The system of claim 5, wherein the two portions of the welding part are respectively a horn and an anvil, and the relative movement between the two portions is made in a horizonal direction.

7. The system of any one of the preceding claims, further comprising:
a plate on which the main body portion of the electrode assembly is to be placed; and
a pusher configured to press the main body portion of the electrode assembly placed on the plate against the plate, so as to hold the electrode assembly during the welding operation by the welding part.

8. A method for manufacturing an electrode assembly, wherein the electrode assembly includes a plurality of unit electrode cells stacked on one another, each of the plurality of unit electrode cells having a unit electrode tab, and wherein the electrode assembly has a main body portion and a tab portion, the tab portion including a plurality of the unit electrode tabs protruding from the main body portion, the method comprising:
collecting the plurality of unit electrode tabs by a tab guide; and
welding the collected plurality of unit electrode tabs by vibration welding,
wherein, during the vibration welding, the collected unit electrode tabs are held and pressed by a tab fixing block, such that vibration force applied to the unit electrode tabs is not transmitted to the main body portion of the electrode assembly.

9. The method of claim 8, wherein the tab fixing block includes two separate pieces, and during the vibration welding, the unit electrode tabs are held and pressed by the two pieces, being positioned in an interval therebetween.

10. The method of claim 8 or 9, wherein the tab guide includes two separate parts, and the plurality of unit electrode tabs are collected by being interposed between and guided by the two separate parts.

11. The method of any one of claims 8 to 10, wherein the vibration welding is performed by a relative movement between two separate portions of a welding part in a state the collected unit electrode tabs are interposed between the two portions.

12. The method of any one of claims 8 to 11, wherein during the vibration welding, the main body portion of the electrode assembly is placed on a plate and held in place by being pressed by a pusher.

## Amended claims

### Amended claims in accordance with Rule 137(2) EPC.

1. A system for manufacturing an electrode assembly (100), wherein the electrode assembly (100) includes a plurality of unit electrode cells stacked on one another, each of the plurality of unit electrode cells having a unit electrode tab (110), and wherein the electrode assembly (100) has a main body portion and a tab portion, the tab portion including a plurality of the unit electrode tabs (110) protruding from the main body portion, the system comprising:
a welding part (300) configured to weld the plurality of unit electrode tabs (110) by applying vibration force;
a tab guide (200) for collecting the plurality of unit electrode tabs (110) to supply the collected unit electrode tabs to the welding part (300) for welding; and
a tab fixing block (500) configured to hold and press the plurality of unit electrode tabs (110) collected by the tab guide (200), wherein the tab fixing block (500) is positioned between the tab guide (200) and the welding part (300), such that the vibration force applied by the welding part (300) is not transmitted to the main body portion of the electrode assembly (100).

2. The system of claim 1,
wherein the tab fixing block (500) includes two separate pieces (510, 520) being configured to change an interval therebetween, and
wherein the tab fixing block (500) is configured to hold and press the plurality of unit electrode tabs (110) positioned in the interval between the two pieces (510, 520) during operation of the welding part (300).

3. The system of any one of the preceding claims, wherein the tab guide (200) includes two separate parts (210, 220) configured to make a relative movement with respect to each other, so as to guide and collect the plurality of unit electrode tabs (110) interposed therebetween.

4. The system of any one of the preceding claims,
wherein the welding part (300) includes two separate portions (310, 320) configured to make a relative movement with respect to each other, and
wherein the welding part (300) is configured to perform vibration welding by making a relative movement between the two portions (310, 320) while the collected unit electrode tabs are interposed therebetween.

5. The system of claim 4, wherein the two portions (310, 320) of the welding part (300) are respectively a horn (310) and an anvil (320), and the relative movement between the two portions (310, 320) is made in a horizonal direction.

6. The system of any one of the preceding claims, further comprising:
a plate on which the main body portion of the electrode assembly (100) is to be placed; and
a pusher configured to press the main body portion of the electrode assembly (100) placed on the plate against the plate, so as to hold the electrode assembly (100) during the welding operation by the welding part (300).

7. A method for manufacturing an electrode assembly (100), wherein the electrode assembly (100) includes a plurality of unit electrode cells stacked on one another, each of the plurality of unit electrode cells having a unit electrode tab (110), and wherein the electrode assembly (100) has a main body portion and a tab portion, the tab portion including a plurality of the unit electrode tabs (110) protruding from the main body portion, the method comprising:
collecting the plurality of unit electrode tabs (110) by a tab guide (200); and
welding the collected plurality of unit electrode tabs by vibration welding,
wherein, during the vibration welding, the collected unit electrode tabs are held and pressed by a tab fixing block (500), wherein the tab fixing block (500) is positioned between the tab guide (200) and the welding part (300), such that vibration force applied to the unit electrode tabs (110) is not transmitted to the main body portion of the electrode assembly (100).

8. The method of claim 7, wherein the tab fixing block (500) includes two separate pieces (510, 520), and during the vibration welding, the unit electrode tabs (110) are held and pressed by the two pieces (510, 520), being positioned in an interval therebetween.

9. The method of claim 7 or 8, wherein the tab guide (200) includes two separate parts (210, 220), and the plurality of unit electrode tabs (110) are collected by being interposed between and guided by the two separate parts (210, 220).

10. The method of any one of claims 7 to 9, wherein the vibration welding is performed by a relative movement between two separate portions (310, 320) of a welding part (300) in a state the collected unit electrode tabs (110) are interposed between the two portions.

11. The method of any one of claims 7 to 10, wherein during the vibration welding, the main body portion of the electrode assembly (100) is placed on a plate and held in place by being pressed by a pusher.
